**Europäisches Patentamt**

**European Patent Office**

**Office européen des brevets**

(19)

(11) Veröffentlichungsnummer: **0 045 039**
**B1**

(12) # EUROPÄISCHE PATENTSCHRIFT

(45) Veröffentlichungstag der Patentschrift:
27.03.85

(51) Int. Cl.⁴: **A 01 B 73/00**

(21) Anmeldenummer: **81105715.7**

(22) Anmeldetag: **21.07.81**

(54) **Ladefahrzeug zur Aufnahme einer Erntebergungsvorrichtung.**

(30) Priorität: **24.07.80 US 171858**

(43) Veroffentlichungstag der Anmeldung:
**03.02.82 Patentblatt 82/5**

(45) Bekanntmachung des Hinweises auf die Patenterteilung:
**27.03.85 Patentblatt 85/13**

(84) Benannte Vertragsstaaten:
**DE FR GB**

(56) Entgegenhaltungen:
**DD - A - 114 565**
**DE - A - 2 311 721**
**US - A - 3 245 695**
**US - A - 3 413 014**

(73) Patentinhaber: **DEERE & COMPANY, 1 John Deere Road, Moline Illinois 61265 (US)**

(72) Erfinder: **Cain, Darryl Francis, 3540 3 Street A, East Moline Illinois 61244 (US)**
Erfinder: **Ehrecke, Kevin Laverne, R.R.1, Box 85, Blue Grass Iowa 52726 (US)**

(74) Vertreter: **Sartorius, Peter et al, DEERE & COMPANY European Office, Patent Department Postfach 503 Steubenstrasse 36-42, D-6800 Mannheim 1 (DE)**

## Beschreibung

Die Erfindung bezieht sich auf ein Ladefahrzeug zur Aufnahme einer Erntebergungsvorrichtung mit einem mindestens zwei mit Abstand zueinander angeordnete, einen Aufnahmeteil bildende Stützflächen aufweisenden Rahmen, an dem mindestens eine Achse zur Aufnahme von Laufrädern vorgesehen ist, wobei ein Teil der Stützflächen an feststehenden Tragelementen und ein Teil an gegenüber diesen in ihrer Lage veränderbaren Tragarmen angeordnet ist.

Es ist bereits ein Ladefahrzeug bekannt (US-A-3 413 014), das aus einem horizontal verlaufenden Längsträger besteht, der in Halterungen auf einem rechteckförmig ausgebildeten Rahmen mittels einer Spannschloßvorrichtung verschwenkbar ist. An dem rohrförmig ausgebildeten Längsträger befinden sich mehrere mit Abstand zueinander angeordnete, nach außen gerichtete Tragarme, deren Enden Stützflächen bilden. Die einzelnen Stützflächen bilden untereinander einen Aufnahmeteil zur Aufnahme einer Erntebergungsvorrichtung. Mittels der Spannschloßverbindung läßt sich die Lage des Aufnahmeteils verändern, so daß, nachdem die Erntebergungsvorrichtung auf die Stützflächen abgelegt worden ist, der Aufnahmeteil in eine Transportlage verschwenkt werden kann. Dieser Aufnahmeteil eignet sich jedoch wegen des feststehenden Abstandes zwischen den Stützflächen nur für eine ganz bestimmte Baugröße von Erntebergungsvorrichtungen.

Ferner ist ein Ladefahrzeug der eingangs aufgeführten Art bekannt (DD-A-114 565), das mit zwei vorderen und hinteren mit Abstand zueinander angeordneten Auflagen und Spannvorrichtungen ausgerüstet ist, die zur Aufnahme von Erntevorsatzgeräten dienen. Der Transportvorgang ist mit den zugehörigen Auflagen so ausgebildet, daß er für die Beförderung gewichts- und dimensionsmäßig verschiedenen Erntevorsätzen angepaßt werden kann. Hierzu sind die längengleichen und radstandverstellbaren, mittig oder außermittig zur Längsachse angeordneten Längsträger seitlich versetzbar und die Spurweite der Hinterachse vergrößerbar. Hierzu sind die Längsträger mittels lösbarer Verbindungselemente an beiden Achsen befestigt. Auf diese Weise können durch Verwendung unterschiedlicher Längsträgerabmessungen oder durch Versetzen der Hinterachse am Längsträger Erntevorsatzgeräte verschiedener Arbeitsbreiten transportiert werden, ohne daß die übrigen Baugruppen verändert werden müssen. Eine derartige Anpassung an verschiedene Erntevorsatzgeräte ist sehr zeitaufwendig.

Demgegenüber liegt der Erfindung die Aufgabe zugrunde, die Tragelemente und die Tragarme eines Ladefahrzeuges zur Aufnahme einer Erntebergungsvorrichtung derart auszubilden und anzuordnen, daß sie auf einfache Weise in kürzester Zeit für unterschiedlich ausgebildete Erntebergungsvorrichtungen umgerüstet werden können. Diese Aufgabe ist bei einem Ladefahrzeug der eingangs aufgeführten Art dadurch gelöst worden, daß die verstellbaren, über eine Tragschiene verbundenen Tragarme über sich in Längsrichtung des Rahmens erstreckende, untereinander fluchtende Gelenkbolzen am Rahmen schwenkbar angeschlossen und in bestimmten Stellungen arretierbar sind. Da die Tragarme an dem Rahmen bzw. dessen Längsträger schwenkbar angeschlossen sind, lassen sich die Tragarme auf einfache Weise zur Abstandveränderung der Stützflächen untereinander in kürzester Zeit so verstellen, daß entweder die gesamte Abstützfläche vergrößert oder verkleinert werden kann. Zur vorteilhaften Aufnahme der Erntebergungsvorrichtung ist es vorteilhaft, daß die an den Tragelementen vorgesehenen offenen Fangausnehmungen seitlich durch Seitenwände und durch eine Rückwand begrenzt sind, so daß eine gute allseitige Fixierung der Erntebergungsvorrichtung gewährleistet wird.

Vorteilhaft ist es ferner, daß neben den schwenkbar gelagerten Tragarmen weitere, kürzere, über eine Tragschiene verbundene Tragarme vorgesehen sind, die unabhängig von den ersten Tragarmen schwenkbar und in verschiedene Stellungen feststellbar sind. Ferner ist es vorteilhaft, daß die äußeren Enden der Tragarme bzw. deren Stützflächen in jeder ihrer Stellungen oberhalb der Fangausnehmungen liegen. Weiterhin ist es vorteilhaft, daß die Tragschiene für die kürzeren, sich seitlich nach innen erstreckenden Tragarme auf einem Radius schwenkbar ist, der kleiner ist als der Radius für die Bewegungsbahn der Tragschiene für die längeren, sich seitlich nach außen erstreckenden Tragarme. Da unterschiedlich lange nebeneinander angeordnete Tragarme mit Stützflächen an dem Längsträger angeordnet sind, ist es möglich, entweder nur den einen Tragarm oder den anderen Tragarm zur Abstützung des vorderen Endes der Erntebegrenzungsvorrichtung einzusetzen, um auf diese Weise die Lage der Erntebergungsvorrichtung in ihrer Transportstellung zu beeinflussen. Ferner ist es möglich, bei relativ langen Erntebergungsvorrichtungen beide Tragarme zur Unterstützung der Erntebergungsvorrichtung einzusetzen, so daß eine gute und sichere Abstützung der Erntebergungsvorrichtung während der Transportfahrt gewährleistet ist.

Nach einem weiteren Merkmal der Erfindung ist es vorteilhaft, daß der Rahmen zur Aufnahme der Tragarme und der Fangausnehmungen über je einen vertikal verlaufenden Schlitz aufweisende Befestigungselemente mit der Vorder- und Hinterachse verbunden ist. Vorteilhaft ist es ferner, daß das Befestigungselement jeweils an der Vorder- und Hinterachse angeschlossen ist und der Schlitz zur Aufnahme eines an dem Längsträgern des Rahmens vorgesehenen Bolzens dient. Hierdurch wird gewährleistet, daß Fertigungstoleranzen bei der Montage ohne weiteres ausgeglichen werden können, da die Schlitze gewisse Verstellungen des Rahmens gegenüber der Vorder- und Hinterachse zulassen. Ferner werden bei ungleichmäßig auftretender Belastung durch die Erntebergungsvorrichtung Spannungen im Rahmen vermieden.

In vorteilhafter Weise ist am Längsträger des Rahmens eine Spannschloßvorrichtung vorgesehen, die lösbar und gelenkig an dem Hinterteil der Erntebergungsvorrichtung angeschlossen ist. Dadurch läßt sich auf einfache Weise der Hinterteil der Erntebergungsvorrichtung gegen die feststehenden Tragtaschen drücken, so daß eine ratterfreie Lagerung der Erntebergungsvorrichtung auch bei Fahrten des Fahrzeuges auf unebenem Gelände gewährleistet ist.

Um beispielsweise Erntebergungsvorrichtungen mit rohrförmigen Rahmenteilen einwandfrei zu lagern, ist es gemäß der Erfindung vorteilhaft, daß zur Aufnahme des Hinterteils der Erntebergungsvorrichtung ein nach oben offenes Aufnahmeteil lösbar am Längsträger angeordnet ist.

Nach einem weiteren Merkmal der Erfindung ist es vorteilhaft, daß das Ladefahrzeug einen Tragrahmen aufweist, an dem lösbar und vertikal verstellbar ein Zwischenrahmen mit den Stützflächen zur Aufnahme der Erntebergungsvorrichtung angeschlossen ist. Vorteilhaft ist es ferner, daß auf dem Zwischenrahmen zahlreiche aus jeweils zwei Tragplatten bestehende Halterungen mit Abstand angeordnet sind, zwischen denen der längere Tragarm an je einem Gelenkbolzen schwenkbar angeschlossen ist, wobei der kürzere Tragarm jeweils mittel- oder unmittelbar neben dem längeren Tragarm an dem gleichen Gelenkbolzen angeschlossen ist. Durch die Verwendung eines Zwischenrahmens ist es möglich, alle wesentlichen Teile zur Abstützung der Erntebergungsvorrichtung auf dem Zwischenrahmen zu montieren und diesen an einem beliebigen Anhängefahrzeug lösbar anzuschließen, so daß der Zwischenrahmen relativ kostengünstig hergestellt werden kann.

In der Zeichnung sind zwei Ausführungsbeispiele eines Ladefahrzeuges für je eine Erntebergungsvorrichtung nach der Erfindung schematisch dargestellt. Es zeigt

Fig. 1 eine Draufsicht eines Ladefahrzeuges,

Fig. 2 eine linke Seitenansicht des Ladefahrzeuges mit in gestrichelten Linien angegebener Erntebergungsvorrichtung,

Fig. 3, 4 und 5 verschiedene Stellungen der Erntebergungsvorrichtung auf dem Ladefahrzeug,

Fig. 6 eine Teilansicht einer Stellvorrichtung zur Verstellung der Erntebergungsvorrichtung,

Fig. 7 einen Schnitt entlang der Linie 7-7 gemäß Fig. 1,

Fig. 8 eine Teilansicht einer Stellvorrichtung zwischen dem einstellbaren Rahmenteil und dem Ladefahrzeug.

In der Zeichnung ist mit 10 ein Rahmen bezeichnet, der auf einem Ladefahrzeug 12 angeordnet ist und der mit einem in der Zeichnung in gestrichelten Linien dargestellten Längsträger 14 ausgerüstet ist, an dem eine Vorderachse und Hinterachse 16 mit Achsschenkeln 18 zur Aufnahme von Laufrädern 20 angeordnet ist. Am vorderen Ende des Ladefahrzeuges 12 befindet sich eine Anhängevorrichtung 24 über die das Ladefahrzeug 12 mittels eines Zugfahrzeuges in Pfeilrichtung 22 gezogen werden kann. Die Vorderachse 16 ist schwenkbar gelagert und mittels der Anhängevorrichtung 24 steuerbar.

Die in der Beschreibung gemachten Angaben über rechts, links, vorne und hinten sind mit Bezug auf die Fahrtrichtung des Ladefahrzeuges 12 vorgenommen worden.

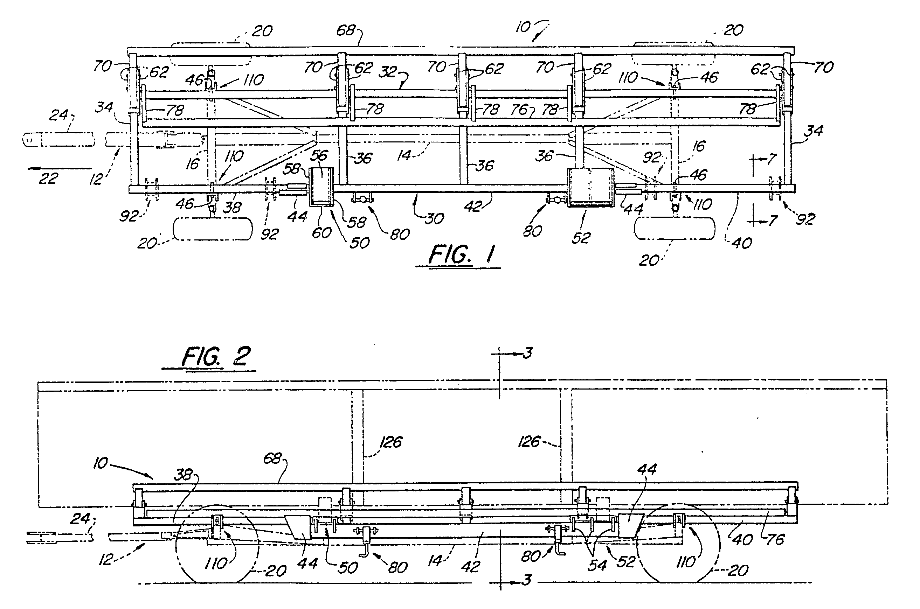

Der Rahmen 10 ist rechteckförmig ausgebildet und so lang, daß er sich über die Vorderachse und Hinterachse 16 hinauserstreckt. Der Rahmen 10 weist eine sich in Fahrtrichtung des Ladefahrzeuges erstreckende linke Rahmenkonstruktion 30 sowie eine parallel dazu verlaufende rechte Rahmenkonstruktion 32 auf, die jeweils an ihrem vorderen und hinteren Ende über einen horizontalverlaufenden, rohrförmig ausgebildeten Querträger 34 verbunden ist. Zwischen diesen äußeren Querträgern 34 liegen weitere Querträger 36, die ebenfalls die beiden Rahmenkonstruktionen 30 und 32 miteinander verbinden. Um die notwendige Stabilität am Ladefahrzeug 12 herzustellen, besteht die linke Rahmenkonstruktion 30 aus einem hohlförmigen vorderen und hinteren Längsträger 38 und 40, deren Querschnitt rechteckförmig ausgebildet ist und unter denen sich ebenfalls ein im Querschnitt rechteckförmiger Träger 42 befindet. Der untere Träger 42 ist über Laschen 44 mit den Längsträgern 38 und 40 fest verbunden, so daß die Längsträger 38 und 40 hierdurch verstärkt werden. Wie aus Fig. 1 und 6 hervorgeht, erstrecken sich von der Rahmenkonstruktion 30 und 32 zwei Bolzen 46 horizontal nach außen, die zum Anschluß der Vorder- bzw. Hinterachse 16 an die Rahmenkonstruktion 30 bzw. 32 dienen.

Eine vordere und hintere Fangausnehmung bzw. Tragtaschen 50 und 52 befinden sich auf dem Träger 42 und sind mittels Laschen 54 mit diesen fest verbunden. Die Tragtaschen 50 und 52 sind einander ähnlich, wobei die vordere Tragtasche 50 beispielsweise einen zur Außenseite hin geneigt verlaufenden Boden 56 sowie Seitenwände 58 und eine Rückwand 60 aufweist. Die vordere Tragtasche 50 ist jedoch etwas schmäler ausgebildet als die hintere Tragtasche 52.

An jeder Verbindungsstelle zwischen dem Querträger 34, 36 und der Rahmenkonstruktion 30 befinden sich zwei mit Abstand zueinander angeordnete und parallel zueinanderverlaufende Gelenke sowie Tragplatten 62, die fest mit dem Querträger 34 verbunden sind. Wie aus Fig. 6 hervorgeht, erstrecken sich diese Tragplatten 62 etwas über den Rahmen 10 hinaus. Eine Bohrung 64 zur Aufnahme eines Gelenkbolzens 72 sowie zahlreiche weitere Bohrungen 66 sind in einer jeden Tragplatte 62 vorgesehen und zueinander ausgerichtet. Eine äußere Tragschiene 68 erstreckt sich über die gesamte Länge des Rahmens 10 und ist mittels sich radial erstreckender Tragarme 70 abgestützt, die zwischen jeweils zwei Tragplatten 62 auf den Gelenkbolzen 72 schwenkbar angeordnet sind, die sich durch die Bohrungen 64 erstrecken. Der Tragarm 70 wird ferner mittels eines Arretierungsbolzens 74 in einer gewünschten Position festgesetzt. Hierzu sind die Tragplatten 62 mit den Bohrungen 66 ausgerüstet. In der Zeichnung sind lediglich zwei Bohrungen 66 vorgesehen, es können jedoch zahlreiche Bohrungen vorgesehen sein, die mit Bezug auf den Gelenkbolzen 72 auf einem Radius liegen.

Eine innere Tragschiene 76 ist ähnlich wie die Tragschiene 68 ausgebildet. Die innere Tragschiene 78 ist ebenfalls mittels der Tragarme 78 auf einem Radius verschwenkbar (Fig. 1, 4, 6). Die inneren Enden der Tragarme 78 der Tragschiene 76 sind hierzu mittels der Gelenkbolzen 72 stirnseitig an der entsprechenden Tragplatte 62 schwenkbar angeschlossen und lassen sich mittels Arretierungsbolzen 77, die sich durch die Bohrungen 66 in den Tragplatten 62 erstrecken, in der gewünschten Position festsetzen.

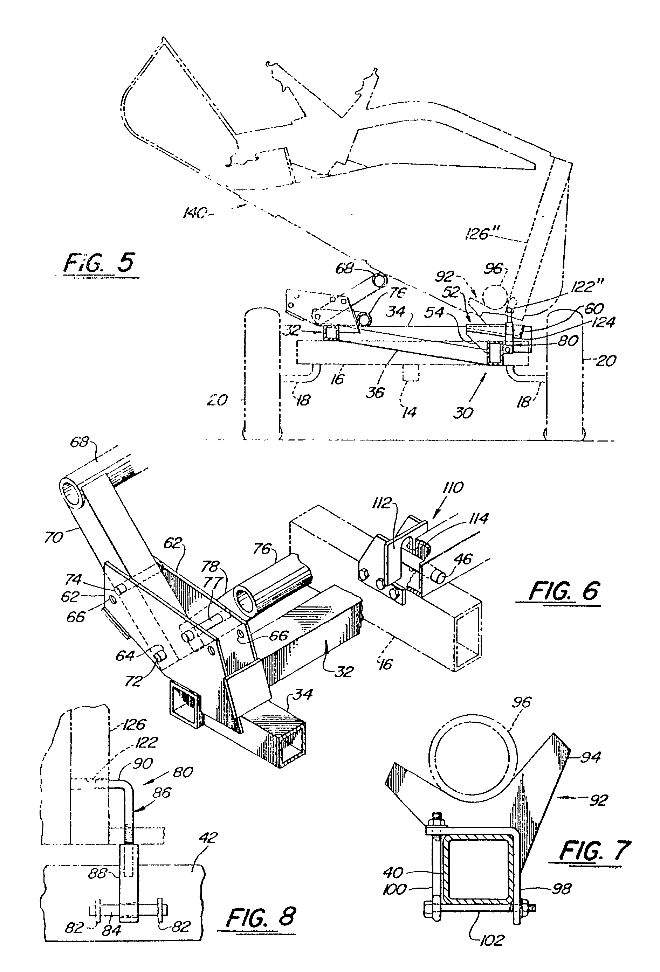

Zwei Spannschloßvorrichtungen 80 üben eine vertikale Stellkraft bzw. Anpreßkraft auf die Erntebergungsvorrichtung in Richtung des Ladefahrzeuges bzw. des Rahmens 10 aus. Wie aus Fig. 8 hervorgeht, ist jede Spannschloßvorrichtung 80 an der linken Rahmenkonstruktion vorgesehen und an dem Längsträger 40 gelenkig angeschlossen. Eine jede Spannschloßvorrichtung 80 weist hierzu einen Anschlußbolzen 84 auf, der in Ösen 82 aufgenommen ist, die am Träger 42 angeordnet sind. Eine L-förmige Gewindestange 86 ist einenends in eine Spannhülse 88 eingeschraubt und anderenends mittels ihres horizontalverlaufenden Schenkels 90 an die Erntebergungsvorrichtung 130 angeschlossen, wobei der Schenkel hierzu in eine entsprechende Bohrung an der Erntebergungsvorrichtung eingeführt wird, nachdem die Erntebergungsvorrichtung auf dem Ladefahrzeug 12 abgelegt worden ist.

Um unterschiedliche Erntebergungsvorrichtungen auf dem Ladefahrzeug 12 zu transportieren, können unterschiedlich ausgebildete Aufnahmeteile 92, wie sie in Fig. 7 veranschaulicht sind auf dem Längsträger 38 bzw. 40 angeordnet werden. Derartige Aufnahmeteile 92 können, wie aus Fig. 1 hervorgeht, an unterschiedlichen Stellen an den Längsträgern 38 und 40 befestigt werden. Ein jedes Aufnahmeteil 92 weist eine oder mehrere nach oben offene Fangausnehmungen 94 auf, die gabelförmig ausgebildet sein können, um auf diese Weise eine geeignete Tragfläche für einen rohrförmigen Tragarm 96 der Erntebergungsvorrichtung zu bilden (Fig. 5, 7). Der Aufnahmeteil 92 ist mittels einer winkelförmigen Halterung 98 ausgestattet, die mittels Schraubenbolzen 100 und 102 am Längsträger 38 bzw. 40 gesichert ist.

Im Arbeitseinsatz wird der Rahmen 10 von dem Ladefahrzeug 12 aufgenommen. Es kann hierzu jedes geeignete Fahrzeug verwendet werden, das mit Laufrädern und einer Anhängevorrichtung versehen ist und geeignete Mittel aufweist, um den Rahmen 10 aufzunehmen. Der Rahmen 10 ist auf der Vorder- und Hinterachse 16 mittels der Rahmenkonstruktion 30 und 32 in etwa symmetrisch mit Bezug auf die Längsachse des Fahrzeuges angeordnet. Der Rahmen 10 wird mittels vier Halterungen 110 an der Vorder- bzw. Hinterachse 16 befestigt. Zur Halterung 110 gehören ferner Anschlußelemente 112, die mittels Schraubenbolzen bzw. Nieten an der Vorder- bzw. Hinterachse 16 befestigt sind und die mit einem vertikalen Schlitz 114 ausgerüstet sind, der zur Aufnahme der Bolzen 46 dient, die sich seitlich von den Rahmenkonstruktionen 30 und 32 nach außen erstrecken. Das Anschlußelement 112 liegt dabei dicht gegen die Rahmenkonstruktion 30 und 32 an, um ein seitliches Verstellen des Rahmens 10 auf der Vorder- bzw. Hinterachse 16 auszuschließen. Die Bolzen 46 erstrecken sich dabei durch die Schlitze 114 (Fig. 6).

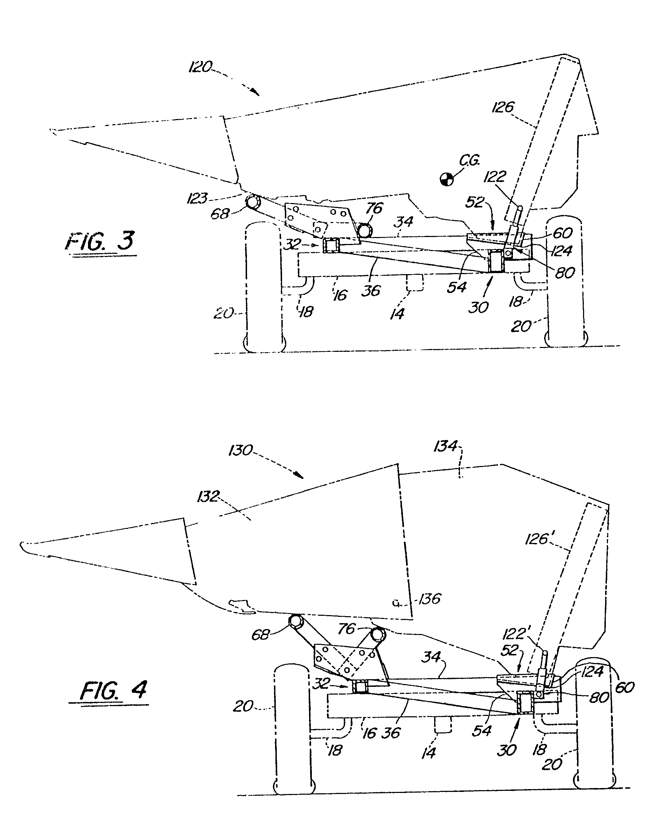

Um eine Erntebergungsvorrichtung auf den Tragschienen 68 und 76 ablegen zu können, müssen diese in die geeignete Lage zur Aufnahme der Erntebergungsvorrichtung verstellt werden. Wird beispielsweise ein Maisgebiß 120 auf den Rahmen 10 abgelegt, so wird die äußere Tragschiene 68 abgesenkt, wobei gleichzeitig die innenliegende Tragschiene 76 in eine Stellung verschwenkt wird, in der sie keine Tragfunktion erfüllt (siehe Fig. 3). Ein Mähdrescher, der beispielsweise mit einem Maisgebiß 120 ausgestattet ist, wird dann unter Verwendung der Steuerorgane des Mähdreschers so manövriert, daß das Maisgebiß auf den Rahmen 10 abgesenkt werden kann, so daß dann der Kontakt zwischen der äußeren Tragschiene 68 und einem Gleitschuh 123 des Maisgebisses hergestellt wird, während ein Hinterteil 124 zwischen einer Rahmenkonstruktion 126 des Maisgebisses 120 auf dem Boden 56 der Tragtaschen 50, 52 abgesetzt werden kann. Eine der Tragtaschen, beispielsweise die vordere Tragtasche 50 kann dabei so dimensioniert sein, daß bei unterschiedlichem Stichmaß der Auflagestellen des Hinterteils 124 ohne weiteres ein Absetzen in die Tragtaschen 50 möglich ist. Ferner ist durch die entsprechende Dimensionierung der Tragtaschen 50 eine geringe Verschiebung des Maisgebisses 120 innerhalb der Tragtaschen in Fahrtrichtung des Ladefahrzeuges 12 möglich. Um unterschiedlich große Maisgebisse aufzunehmen und um entsprechende Toleranzen ausgleichen zu können, kann die hintere Tragtasche 52 wesentlich breiter ausgelegt werden, als die vordere Tragtasche 50. Bei vielen Mähdreschern ist der Fahrerstand seitlich mit Bezug auf die Mittellinie am Mähdrescher vorgesehen, so daß die Bedienungsperson eine gute Sicht auf die linke Tragtasche 50 hat und auf einfache Weise das Hinterteil 124 des Maisgebisses 120 in die Tasche einführen kann.

Durch die Anlage des Hinterteils 124 des Maisgebisses 120 gegen die Rückwände 60 der Tragtaschen 50 und 52 behält das Maisgebiß 10 die Lage bei, die es durch Absetzen auf den Rahmen 10 erhalten hat. Dies wird auch dadurch unterstützt, daß der Boden 56 der Tragtaschen 50, 52 geneigtverlaufend angeordnet ist und die Tragschiene 68 höher liegt als die Tragtaschen. Um das Maisgebiß 120 gegen den Rahmen 10 zu drücken und in den Tragtaschen 50 und 52 zu halten, ist die Spannschloßvorrichtung 80 vorgesehen, die hierzu durch Drehen des Schenkels 90 so eingestellt wird, daß der Schenkel 90 in eine in der Rahmenkonstruktion 126 vorgesehene Bohrung 122 eingeführt werden kann. In Fig. 4 ist eine Erntebergungsvorrichtung 130 für Getreide veranschaulicht, beispielsweise für Sojabohnen, wobei die gestrichelten Linien der Erntebergungsvorrichtung 130 die Transportlage angeben. Die Erntebergungsvorrichtung 130 weist Halmteiler 132 auf, die an den Seitenteilen 134 der Erntebergungsvorrichtung vertikal schwenkbar gelagert sind. Hierzu dient ein Gelenkbolzen 136 der sich durch den Halmteiler 132 und das Seitenteil 134 erstreckt. Der in Fig. 4 dargestellte Halmteiler 132 kann auch durch ein anderes Erntebergungselement ersetzt werden, das mit dem Seitenteil 134 der Erntebergungsvorrichtung 130 gelenkig verbunden wird. Die innenliegende Tragschiene 76, die auch als Hilfstragschiene bezeichnet werden kann, kann bei Transport einer derartigen Erntebergungsvorrichtung 130 in Verbindung mit der Tragschiene 68 eingesetzt werden, um eine großflächigere Unterstützung der Erntebergungsvorrichtung 130, insbesondere auch der vorderen Teile zu erhalten, so daß bei Fahrten auf unebenem Gelände, unerwünschte Schwingungen bzw. Vibrationen am Halmteiler bzw. an dem Halmteiler 132 der Erntebergungsvorrichtung 130 vermieden werden können. Der Hinterteil 124 der Erntebergungsvorrichtung 130 ist auf gleiche Weise wie der Hinterteil 124 des Maisgebisses 120 gesichert und nach unten gezogen. Andere Erntebergungsvorrichtungen beispielsweise für Getreide, die hierzu eine Schneidwerksplattform 140 aufweisen (siehe Fig. 5), können hierzu in den lösbaren Aufnahmeteilen 92 abgestützt werden, wozu der Tragrahmen 96 der Schneidwerksplattform 140 in die Fangausnehmung 92 eingeführt wird. Eine gute Abstützung der Schneidwerksplattform 140 erhält man dadurch, daß die äußere Tragschiene 68 gemäß Fig. 5 nach innen verschwenkt wird, während die Tragschiene 76 wiederum in eine Stellung verschwenkt wird, in der sie keine Tragfunktion ausübt. Dabei liegt die innere Tragschiene 76 auf dem Querträger 34 auf. Die Schneidwerksplattform 140 wird, wie bereits beschrieben, ebenfalls über die Spannschloßvorrichtung 80 gesichert. Bei Transport der Schneidwerksplattform 140 liegt jedoch das Hinterteil 124 nicht in der Tragtasche 50, 52 sondern in der Fangausnehmung 94 auf.

Um die gewünschte Aufnahmefläche zur Aufnahme einer Erntebergungsvorrichtung zu erhalten, brauchen also lediglich die Tragschienen 68 und 76 entsprechend verschwenkt zu werden. Dies kann nach Herausnahme der Arretierungsbolzen 74 und 77 ermöglicht werden. Durch die vorteilhafte Positionierung der Tragschienen 68 und 76 erhält man eine vorteilhafte durchgehende Transportfläche für die Erntebergungsvorrichtung, so daß eine ganz exakte Ausrichtung des vorderen Teils der Erntebergungsvorrichtung nicht notwendig ist.

Wie aus den Fig. 3, 4 und 5 hervorgeht, kann der Rahmen 10 unterschiedlich ausgebildete Erntebergungsvorrichtungen auf ähnliche Weise lagern. Die vertikalverlaufenden Streben der Rahmenkonstruktion 126, 126' und 126" der Erntebergungsvorrichtungen können dabei ähnlich geneigt sein. Die vertikalverlaufenden Streben der Rahmenkonstruktionen mit den zugehörigen Bohrungen 122, 122' und 122" ermöglichen jeweils die Verwendung unveränderter Kupplungselemente für die Erntebergungsvorrichtung, die mit den Kupplungselementen eines Schrägfördergehäuses zusammenpassen. Die einzelnen Transporteinrichtungen sind so gewählt, daß die Neigung der vertikalverlaufenden Streben der Rahmenkonstruktion 126, 126', 126" so ausgelegt ist, daß ein leichterer An- und Abkuppelvorgang zwischen Schneidwerksvorrichtung und Schrägfördergehäuse beim Absetzen bzw. beim Aufnehmen von dem Ladefahrzeug 12 möglich ist. Insbesondere ist die Neigung so gewählt, daß beim Absenken der Erntebergungsvorrichtung auf den Rahmen 10 der vordere Teil der Erntebergungsvorrichtung den Rahmen zuerst berührt.

Aufgrund der vorteilhaften Ausbildung ist der Rahmen 10 einfach herzustellen und daher preiswert. Er kann mit einem normalen Fahrgestell ausgerüstet werden, um unterschiedlich gestaltete Erntebergungsvorrichtungen 120, 130 bzw. 140 ohne eine entsprechende Abänderung an der Erntebergungsvorrichtung aufzunehmen.

## Patentansprüche

1. Ladefahrzeug (12) zur Aufnahme einer Erntebergungsvorrichtung (120, 130, 140) mit einem mindestens zwei mit Abstand zueinander angeordnete, einen Aufnahmeteil bildende Stützflächen aufweisenden Rahmen (10), an dem mindestens eine Achse (16) zur Aufnahme von Laufrädern (20) vorgesehen ist, wobei ein Teil der Stützflächen an feststehenden Tragelementen (Tragtaschen 50, 52) und ein Teil an gegenüber diesen in ihrer Lage veränderbaren Tragarmen (70) angeordnet ist, dadurch gekennzeichnet, daß die verstellbaren, über eine Tragschiene (68) verbundenen Tragarme (70) über sich in Längsrichtung des Rahmens (10) erstreckende, untereinander fluchtende Gelenkbolzen (72) am Rahmen (10) schwenkbar angeschlossen und in bestimmten Stellungen arretierbar sind.

2. Ladefahrzeug nach Anspruch 1, dadurch gekennzeichnet, daß die feststehenden Tragelemente, als nach oben offene Fangausnehmungen (Tragtaschen 50, 52) ausgebildet sind, die aus je einem nach außen geneigt verlaufenden Boden (56) bestehen, der von zwei Seitenwänden (58) und einer Rückwand (60) begrenzt wird.

3. Ladefahrzeug nach einem oder mehreren der vorherigen Ansprüche, dadurch gekennzeichnet, daß neben den schwenkbar gelagerten Tragarmen (70) weitere, kürzere, über eine Tragschiene (76) verbundene Tragarme (78) vorgesehen sind, die unabhängig von den ersten Tragarmen (70) schwenkbar und in verschiedenen Stellungen feststellbar sind.

4. Ladefahrzeug nach einem oder mehreren der vorherigen Ansprüche, dadurch gekennzeichnet, daß die äußeren Enden der Tragarme (70, 78) bzw. deren Stützflächen in jeder ihrer Stellungen oberhalb der Fangausnehmungen (Tragtaschen 50, 52) liegen.

5. Ladefahrzeug nach Anspruch 3 oder 4, dadurch gekennzeichnet, daß die Tragschiene (76) für die kürzeren, sich seitlich nach innen erstreckenden Tragarme (78) auf einem Radius schwenkbar ist, der kleiner ist als der Radius für die Bewegungsbahn der Tragschiene (68) für die längeren, sich seitlich nach außen erstreckenden Tragarme (70).

6. Ladefahrzeug nach einem oder mehreren der vorherigen Ansprüche, dadurch gekennzeichnet, daß der Rahmen (10) zur Aufnahme der Tragarme (70, 78) und der Fangausnehmungen (Tragtaschen 50, 52) über je einen vertikal verlaufenden Schlitz (114) aufweisende Befestigungselemente (112) mit der Vorder- und Hinterachse (16) verbunden ist.

7. Ladefahrzeug nach Anspruch 6, dadurch gekennzeichnet, daß das Befestigungselement (112) jeweils an der Vorder- und Hinterachse (16) angeschlossen ist und der Schlitz (114) zur Aufnahme eines an den Längsträgern (32, 38, 40) des Rahmens (10) vorgesehenen Bolzens (46) dient.

8. Ladefahrzeug nach einem oder mehreren der vorherigen Ansprüche, dadurch gekennzeichnet, daß am Längsträger (38, 40) des Rahmens (10) eine Spannschloßvorrichtung (80) vorgesehen ist, die lösbar und gelenkig an dem Hinterteil (124) der Erntebergungsvorrichtung (120, 130, 140) angeschlossen ist.

9. Ladefahrzeug nach einem oder mehreren der vorherigen Ansprüche, dadurch gekennzeichnet, daß zur Aufnahme des Hinterteils (124) der Erntebergungsvorrichtung (140) ein nach oben offenes Aufnahmeteil (92) lösbar am Längsträger (40) angeordnet ist.

10. Ladefahrzeug nach einem oder mehreren der vorherigen Ansprüche, dadurch gekennzeichnet, daß das Ladefahrzeug (12) einen Tragrahmen (Längsträger 14) aufweist, an dem lösbar und vertikal verstellbar ein Zwischenrahmen (Längsträger 32, 38, 40, Querträger 34) mit den Stützflächen zur Aufnahme der Erntebergungsvorrichtung (120, 130, 140) angeschlossen ist.

11. Ladefahrzeug nach Anspruch 10, dadurch gekennzeichnet, daß auf dem Zwischenrahmen (Längsträger 32, 38, 40, Querträger 34) zahlreiche aus jeweils zwei Tragplatten (62) bestehende Halterungen mit Abstand angeordnet sind, zwischen denen der längere Tragarm (70) an je einem Gelenkbolzen (72) schwenkbar angeschlossen ist, wobei der kürzere Tragarm (78) jeweils mittel- oder unmittelbar neben dem längeren Tragarm (70) an dem gleichen Gelenkbolzen (72) angeschlossen ist.

## Claims

1. A loading vehicle (12) for carrying a crop pick-up means (120, 130, 140), having a frame (10) which has at least two spaced-apart support surfaces which form a carrying means, at least one axle (16) being provided on the frame (10) for carrying wheels (20), wherein part of the support surfaces is arranged on stationary carrier elements (carrier pockets 50, 52) and part is arranged on carrier arms (70) which are variable in position with respect to the carrier elements, characterised in that the displaceable carrier arms (70) which are connected by way of a carrier rail (68) are pivotally connected to the frame (10) by way of mutually aligned pivot pins (72) which extend in the longitudinal direction of the frame (10), and said carrier arms can be locked in given positions.

2. A loading vehicle according to claim 1 characterised in that the stationary carrier elements are in the form of upwardly open receiving recesses (carrier pockets 50, 52) which each comprise an outwardly inclinedly extending floor (56) which is defined by two side walls (58) and a rear wall (60).

3. A loading vehicle according to one or more of the preceding claims characterised in that, besides the pivotally mounted carrier arms (70), there are further shorter carrier arms (78) which are connected by way of a carrier rail (76) and which are pivotal independently of the first carrier arms (70) and which can be fixed in various positions.

4. A loading vehicle according to one or more of the preceding claims characterised in that the outer ends of the carrier arms (70, 78) or the support surfaces thereof are disposed in each of their positions above the receiving recesses (carrier pockets 50, 52).

5. A loading vehicle according to claim 3 or 4 characterised in that the carrier rail (76) for the shorter, laterally inwardly extending carrier arms (78) is pivotal on a radius which is less than the radius for the path of movement of the carrier rail (68) for the longer, laterally outwardly extending carrier arms (70).

6. A loading vehicle according to one or more of the preceding claims characterised in that the frame (10) for carrying the carrier arms (70, 78) and the receiving recesses (carrier pockets 50, 52) is connected to the front and rear axles (16) by way of securing elements (112) each having a vertically extending slot (114).

7. A loading vehicle according to claim 6 characterised in that the respective securing element (112) is connected to the front and rear axle (16) respectively, and the slot (114) serves to accommodate a pin (46) provided on the longitudinal carrier members (32, 38, 40) of the frame (10).

8. A loading vehicle according to one or more of the preceding claims characterised in that provided on the longitudinal carrier member (38, 40) of the frame (10) is a tensioning means (80) which is releasably and pivotally connected to the rear portion (124) of the crop pick-up means (120, 130, 140).

9. A loading vehicle according to one or more of the preceding claims characterised in that an upwardly open receiving means (92) is releasably disposed on the longitudinal carrier member (40), for receiving the rear portion (124) of the crop pick-up means (140).

10. A loading vehicle according to one or more of the preceding claims, characterised in that the loading vehicle (12) has a carrier frame (longitudinal carrier member 14) to which an intermediate frame (longitudinal carrier members 32, 38, 40, transverse carrier member 34) with the support surfaces for carrying the crop pick-up means (120, 130, 140) is releasably and vertically displaceably connected.

11. A loading vehicle according to claim 10, characterised in that numerous holding means each comprising two carrier plates (62) are disposed with a spacing on the intermediate frame (longitudinal carrier members 32, 38, 40, transverse carrier member 34) , with the longer carrier arm (70) pivotally connected to a respective pivot pin (72) between said holding means, wherein the respective shorter carrier arm (78) is connected directly or indirectly beside the longer carrier arm (70) to the same respective pivot pin (72).

**Revendications**

1. Véhicule de chargement (12) pouvant recevoir un ensemble de récolte (120, 130, 140), comprenant un châssis (10) comportant au moins deux surfaces d'appui écartées l'une de l'autre et formant une partie de réception, au moins un essieu (16) pour le montage de roues porteuses (20) étant prévu sur ce châssis, une partie des surfaces d'appui étant prévue sur des éléments de support fixes (logements de support 50, 52) et une partie sur des bras de support (70) dont la position peut être modifiée par rapport aux précédents, caractérisé en ce que les bras de support déplaçables (70), reliés par un rail de support (68), sont raccordés de façon pivotante au châssis (10) par des axes d'articulation (72) alignés entre eux et s'étendant dans le sens longitudinal du châssis (10), et peuvent être verrouillés dans des positions déterminées.

2. Véhicule de chargement suivant la revendication 1, caractérisé en ce que les éléments de support fixes se présentent sous la forme d'évidements de réception (logements de support 50, 52) ouverts en direction du haut, constitués chaque fois par un fond (56) incliné vers l'extérieur, qui est limité par deux parois latérales (58) et par une paroi arrière (60).

3. Véhicule de chargement suivant l'une quelconque des revendications précédentes, caractérisé en ce qu'il est prévu, à côté des bras de support (70) montés de façon pivotante, d'autres bras de support plus courts (78) reliés par un rail de support (76), qui peuvent pivoter indépendamment des premiers bras de support (70) et qui peuvent être verrouillés dans différentes positions.

4. Véhicule de chargement suivant l'une quelconque des revendications précédentes, caractérisé en ce que les extrémités extérieures des bras de support (70, 78) ou leurs surfaces d'appui se trouvent, dans chacune de leurs positions, au-dessus des évidements de réception (logements de support 50, 52).

5. Véhicule de chargement suivant la revendication 3 ou 4, caractérisé en ce que le rail de support (76) prévu pour les bras de support plus courts (78) s'étendant latéralement vers l'intérieur peut pivoter sur un rayon qui est plus petit que le rayon de la trajectoire du rail de support (68) prévu pour les bras de support plus longs (70) s'étendant latéralement vers l'extérieur.

6. Véhicule de chargement suivant l'une quelconque des revendications précédentes, caractérisé en ce que le châssis (10) servant à la réception des bras de support (70, 78) et des évidements de réception (logements de support 50, 52) est relié à l'essieu avant et à l'essieu arrière (16) par des éléments de fixation (112) présentant chacun une fente verticale (114).

7. Véhicule de chargement suivant la revendication 6, caractérisé en ce que l'élément de fixation (112) est raccordé chaque fois à l'essieu avant et à l'essieu arrière (16), la fente (114) servant à la réception d'un axe (46) prévu sur les longerons (32, 38, 40) du châssis (10).

8. Véhicule de chargement suivant l'une quelconque des revendications précédentes, caractérisé en ce qu'il est prévu, sur le longeron (38, 40) du châssis (10), un dispositif de verrouillage rapide par serrage (80) qui est raccordé amoviblement et de façon articulée à la partie arrière (124) de l'ensemble de récolte (120, 130, 140).

9. Véhicule de chargement suivant l'une quelconque des revendications précédentes, caractérisé en ce qu'un organe de réception (92) ouvert en direction du haut est relié amoviblement au longeron (40) pour la réception de la partie arrière (124) de l'ensemble de récolte (120, 130, 140).

10. Véhicule de chargement suivant l'une quelconque des revendications précédentes, caractérisé en ce que le véhicule de chargement (12) comprend un châssis porteur (longeron 14) auquel un châssis auxiliaire (longerons 32, 38, 40, traverses 34) présentant les surfaces d'appui pour la réception de l'ensemble de récolte (120, 130, 140) est raccordé amoviblement et de façon déplaçable dans le sens vertical.

11. Véhicule de chargement suivant la revendication 10, caractérisé en ce qu'il est prévu, sur le châssis auxiliaire (longerons 32, 38, 40, traverses 34), un grand nombre d'organes de montage écartés l'un de l'autre constitués chaque fois par deux plaques de support (62), entre lesquels le bras de support le plus long (70) est relié à articulation chaque fois par un axe d'articulation (72), le bras de support le plus court (78) étant monté chaque fois directement ou indirectement à côté du bras le plus long (70) sur le même axe d'articulation (72).

FIG. 1

FIG. 2

FIG. 3

FIG. 4

FIG. 5

FIG. 6

FIG. 7

FIG. 8